# EUROPÄISCHE PATENTSCHRIFT

(11) **EP 3 429 820 B1**
(45) Veröffentlichungstag und Bekanntmachung des Hinweises auf die Patenterteilung: **02.08.2023**
(21) Anmeldenummer: 17710879.2
(22) Anmeldetag: 14.03.2017
(51) Int. Cl.: B29C 65/20, B29C 65/78, E06B 3/96

(54) **VORRICHTUNG UND VERFAHREN ZUM VERBINDEN VON PROFILTEILEN**
DEVICE AND METHOD FOR CONNECTING PROFILED PARTS
DISPOSITIF ET PROCÉDÉ POUR RELIER DES PIÈCES PROFILÉES

(30) Priorität: 15.03.2016 DE 102016104785; 17.08.2016 DE 102016115262
(43) Veröffentlichungstag der Anmeldung: 23.01.2019
(73) Patentinhaber: ROTOX Holding GmbH & Co. KG, 65611 Brechen (DE)
(72) Erfinder:
(74) Vertreter: Müller, Eckhard
(86) Internationale Anmeldenummer: PCT/EP2017/055951
(87) Internationale Veröffentlichungsnummer: WO 2017/157914

(56) Entgegenhaltungen:
- WO-A1-2014/122572
- WO-A1-2016/177715
- DE-A1- 4 131 442
- DE-A1-102015 013 439
- DE-B1- 2 847 023
- DE-U1- 9 111 119

## Beschreibung

Die Erfindung betrifft eine Vorrichtung zum Verbinden zweier Profilteile aus Kunststoff.

Zudem betrifft die Erfindung ein Verfahren zum Verbinden von Profilteilen aus Kunststoff.

Vorrichtungen und Verfahren der eingangs genannten Art werden insbesondere zum Verschweißen von PVC-Profilstäben zu Fensterrahmen oder Türrahmen verwendet. Dazu werden die Profilstäbe vor dem Verschweißen auf die jeweils erforderliche Länge abgelängt und, sofern erforderlich, auf Gehrung geschnitten, um die Profilteile anschließend an den Schnittflächen, also an den Gehrungsschnittflächen durch Verschweißen zu verbinden.

Das eigentliche Verschweißen der Profilteile erfolgt durch Anschmelzen und anschließendes Fügen der Verbindungsflächen an den Profilstabenden. Hierzu werden die zu verschweißenden Profilteile zunächst in eine entsprechende Vorrichtung eingelegt und mit Hilfe von Anschlägen und Führungen positioniert. Daraufhin werden die Verbindungsflächen für den sogenannten Angleich- und Anwärmprozess in einer Fügerichtung gegen die Heizfläche des Heizelementes gedrückt, wobei Material an der Verbindungsfläche, also im Schweißbereich geschmolzen wird. Nach dem Erwärmen folgt das Umstellen und Fügen, wobei das Heizelement zwischen den Profilteilen entfernt wird. Abschließend werden die Profilteile mit den angeschmolzenen Verbindungsflächen, also dem angeschmolzenen Schweißbereich in Fügerichtung aufeinander zubewegt, also gegeneinander gepresst, wobei sich der noch heiße, thermoplastische Werkstoff der beiden Profilstabenden derart verbindet, dass eine stabile Schweißverbindung entsteht. Ein solches Vorgehen ist zum Beispiel einleitend in der DE 10 2012 112 533 A1 erwähnt.

In der DE 10 2012 112 533 A1 finden auch Parallelschub- und Diagonalschubverfahren Erwähnung. Bei dem Parallelschubverfahren bewegen sich die anzuschmelzenden Gehrungs- bzw. Verbindungsflächen während des Schmelzprozesses von beiden Seiten gleichmäßig auf die Heizflächen des mittig feststehenden Heizelementes zu, wobei die Bewegung der Profilteile beispielsweise gegenläufig und senkrecht zu den Gehrungsschnittflächen oder senkrecht zur Längsachse des Profilteils erfolgen kann. Bei dem Diagonalschubverfahren dagegen ist eines der Profilteile feststehend positioniert, während sowohl das andere Profilteil als auch das Heizelement in Längsrichtung des feststehenden Profilteils bewegt wird.

Die Fügepartner selbst sind um den sogenannten Abbrand länger als das spätere Fertigmaß der verbundenen Elemente. Ein Teil dieses Abbrandes wird von dem Heizelement abgeschmolzen, ein anderer Teil wird in einem nächsten Schritt gefügt (gestaucht). Dieses Verhältnis des Abschmelzens und Stauchens des Abbrandes ist variabel. Auch der Abbrand selbst kann unterschiedlich sein.

Während des eigentlichen Abschmelzprozesses beginnt das PVC zu fließen und verformt sich, hierbei bewegt sich die Schmelze nach innen in die Profilkammern und nach außen auf die Sichtflächen des PVC-Profils. Um dieses Fließen und Verformen nach außen, also auf die Sichtflächen zu kontrollieren, wird das Profil mit Begrenzungselementen, wie z.B. Begrenzungsmessern eingeengt (begrenzt). Dieses Begrenzungselement ist jedoch bekannter Weise bei dem Schweißprozess selbst unbeweglich mit den Profilträgern verbunden. Die Begrenzungselemente selbst können zwar eng eingestellt werden, jedoch kommen sie nicht in Kontakt mit dem Profilanschlag und dem Heizelement, somit bleibt immer ein definierter Spalt, in den die Schmelze fließen kann. Diese nach außen gedrückte Schmelze erstarrt im anschließenden Fügeprozess, so dass sich eine Schweißraupe bildet. Nach einer gewissen Abkühlzeit muss diese Schweißraupe entfernt werden.

Aus der DE 22 10 814 A ist eine Vorrichtung zum Entfernen von Schweißwulsten an der Stoßfuge zwischen miteinander verschweißten Kunststoffprofilstäben bekannt. Hierzu ist ein Messerpaar mit zwei Messern vorgesehen, die in Richtung der Wurzel der Schweißwulste aufeinander zubewegt werden, um die Schweißwulste abzustechen.

Aus der DE 30 01 370 A1 ist eine Vorrichtung zum Abstechen von überstehenden Schweißraupen an den Sichtflächen von aus Kunststoffprofilstäben geschweißten Fensterrahmen bekannt. Hierzu ist ein Fräswerkzeug für den das Rahmenaußeneck aufnehmenden Support vorgesehen, der in einem Maschinengestell längsverschiebbar geführt ist und mindestens ein Abstechmesser trägt, das bei der Supportbewegung an der Schweißraupe entlangbewegt wird.

Aus dem Stand der Technik ist zudem ein Verfahren bekannt, mit dem ein Austreten der Schmelze nach außen, also auf die Sichtflächen der Profilteile unterbunden wird. Hierzu ist wiederum ein Bearbeitungswerkzeug vorgesehen, mit dem ein Fließen und Verformen des Schmelzgutes kontrollierbar ist, wobei das Bearbeitungswerkzeug ein Formteil aufweist, welches zu dem Profilteil bewegbar ist. Im Rahmen dieses vorbekannten Verfahrens wird das Formteil bei einem Abschmelzen des zumindest einen Profilteils aus einer Ruheposition in Richtung zu einer Arbeitsposition relativ zu dem zumindest einen Profilteil und dem Heizelement bewegt.

Aus der DE 10 2015 107 121 A1 sind eine Vorrichtung und ein Verfahren zum Verschweißen von Kunststoffprofilteilen bekannt, wobei ein zweiteiliges Begrenzungselement vorgesehen ist, welches ein Fließen und Verformen von Schmelzgut des angeschmolzenen Profilteils kontrolliert. Das Begrenzungselement weist zumindest ein Anlageelement und ein Formteil auf, welche sowohl zueinander als auch zu dem Profilteil bewegbar sind.

Dabei ist auch vorgesehen, dass das Formteil in einer Horizontalrichtung, also parallel zur Oberfläche des zumindest einen Profilteils, bewegt wird. Diese Horizontalbewegung kann jedoch zur Folge haben, dass eine Schubbewegung auf das Kunststoffprofil ausgeübt wird, die zu einer Beschädigung des Profils führen kann.

Es ist deshalb Aufgabe der Erfindung, ein verbesserte Vorrichtung und eine verbessertes Verfahren zum Verbinden von Kunststoffprofilteilen bereitzustellen, die diese Nachteile vermeiden und zugleich den Austritt der Schmelze kontrollierbarer gestalten, so dass ein Nachbearbeiten völlig oder zumindest teilweise entfallen kann.

Die Aufgabe wird durch eine Vorrichtung mit den Merkmalen des Anspruchs 1 sowie durch ein Verfahren mit den Merkmalen des Anspruchs 8 gelöst. Vorteilhafte Ausgestaltungen der Erfindung ergeben sich aus den der Unteransprüchen.

Die Erfindung sieht vor, dass das Formteil und die Profilträgeraufnahmen einen Winkel zwischen 10° und 50° miteinander bilden und das Formteil aus einer Ruheposition in Richtung zu einer Arbeitsposition relativ zu der Profilträgeraufnahme bewegbar ist.

Grundlegende Idee der Erfindung ist es, ein bewegliches Formteil für die Bearbeitung von Sichtflächen von Profiteilen zur Verfügung zu stellen, wobei das Formteil schräg bzw. diagonal auf das Profilteil bzw. Profilträgeraufnahme zubewegt wird. Es hat sich gezeigt, dass durch diese konstruktive Ausgestaltung eine verbesserte Sichtflächenbearbeitung erzielbar ist, die zu keiner Beschädigung der Profilteile, auch von folierten Profilteilen führt. Insbesondere entsteht keine Schweißraupe nach dem Schweißvorgang. Zudem kann ein Nachbearbeiten auf Folgestationen ganz oder zum großen Teil entfallen.

Vorzugsweise kann vorgesehen sein, dass das Formteil in Richtung der Gehrung der Profilteile beziehungsweise entlang der und/oder bis vor die Stirnseitenschnittkante des Profilteils bewegbar ist. Dies hat den Vorteil, dass zum einen die für die Bewegung des Formteils erforderliche Kraft geringer ausfällt als bei einer reinen Bewegung des Formteils auf die Stirnseitenschnittkante zu. Außerdem hat sich gezeigt, dass die mit einer solchen Formteilbewegung erzielbare Optik und Formgebung der fertigen Schweißverbindung durch die zusätzliche Bewegungsrichtung positiv beeinflusst wird. Dieser Effekt ist insoweit vergleichbar mit dem Schneiden eines Messers, als die zur Bewegung des Formmessers benötige Kraft geringer ausfällt, auch wenn kein Schneidvorgang sondern nur ein Kontrollieren des Fließens und/oder ein Verschieben oder Verdrängen von Schweißgut stattfindet. Die Bewegung des Formteils dient zur Formgebung und Kontrolle des angeschmolzenen Kunststoff-, insbesondere PVC-Materials während des Verbindungsprozesses.

Erfindungsgemäß weist das Bearbeitungswerkzeug ein Begrenzungsmesser auf, das oberhalb der Profilträgeraufnahmen und parallel zu den Profilträgeraufnahmen angeordnet ist, wobei das Begrenzungsmesser oder ein Teil des Begrenzungsmessers in Längsrichtung der Profilträgeraufnahmen zwischen 0° und 2° von der Längsrichtung der Profilträgeraufnahmen abweicht. Hierdurch wird eine verbesserte Kontrolle des Fliesens und Verformens des Kunststoffs erreicht.

Eine praktikable Variante der Erfindung sieht vor, dass das Begrenzungsmesser oder ein Teil des Begrenzungsmessers in Längsrichtung der Profilträgeraufnahmen 1° von der Längsrichtung der Profilträgeraufnahmen abweicht. Vorzugsweise ist das Bearbeitungswerkzeug oberhalb und/oder unterhalb der Profilträgeraufnahmen angeordnet.

Eine weitere vorteilhafte Ausgestaltung der Erfindung sieht vor, dass die Kraft zur Bewegung des Formteils einstellbar ist. Die Kraft wird dabei bevorzugt dosiert eingestellt.

Gemäß einer weiteren vorteilhaften Weiterbildung der Erfindung weist das Bearbeitungswerkzeug ein Konturteil für die Bearbeitung von Innenecken von in den Profilträgeraufnahmen rechtwinklig angeordneten Profilträgern auf, wobei das Konturteil seitlich des Formteils angeordnet und ausgebildet ist. Durch diese konstruktive Maßnahme wird auch der Austritt der Schmelze an Innenecken von zusammengefügten Profilen kontrollierbarer gestaltet.

Vorteilhafter Weise ist das Formteil über etwa 50°C, vorzugsweise zwischen 80°C und 250°C, besonders bevorzugt zwischen 120°C und 200°C, erwärmbar. Hierdurch wird während des Zusammenfügens der Profilteile eine gleichmäßigere Temperaturverteilung und somit eine homogenere Schweißverteilung erreicht, was wiederum zur Verbesserung bzw. Erhöhung der Festigkeitswerte an den Ecken der zusammengefügten Profilteile führt.

Ein Verfahren zum Verbinden von Profilteilen, bei dem die Profilteile in Profilträgeraufnahmen aufgenommen und eingespannt werden, ist Gegenstand von Anspruch 8. Bei diesem erfindungsgemäßen Verfahren werden wenigstens ein Profilteil und eine Heizfläche eines Heizelementes miteinander in Kontakt gebracht, um das wenigstens eine Profilteil in seinem Schweißbereich vor einem Zusammenfügen mit dem anderen Profilteil anzuschmelzen, wobei ein Bearbeitungswerkzeug vorgesehen ist, das zumindest ein Formteil aufweist, mit dem ein Fließen und Verformen eines Schmelzgutes auf einer Sichtfläche einer Profilteils kontrolliert wird. Das erfindungsgemäße Verfahren zeichnet sich dadurch aus, dass das Formteil in Richtung der Profilträgeraufnahmen bewegt wird und dabei das Formteil und die Profilträgeraufnahmen einen Winkel zwischen 10° und 50° miteinander bilden.

Eine praktikable Variante des erfindungsgemäßen Verfahrens sieht dabei vor, dass das Formteil zusammen mit seiner Unterkante eine Bewegung zwischen 0° und 85° vollzieht. Hierdurch kann das Formteil vor die Profilstirnkante, auch während der Prozesse des Schweißens und des Stauchens, gefahren werden. Das Formteil bildet mit seiner Unterkante vorzugsweise ein Formesser, wobei die Drehung vorteilhafterweise mittels eines Stellmotor, besonders bevorzugt auch während der Bewegung des Formessers erfolgt. Alternativ kann die Bewegung auch mittels Kreuzschlitte erfolgen.

Eine vorteilhafte Weiterbildung des erfindungsgemäßen Verfahrens sieht vor, dass das Formteil über etwa 50°C, bevorzugt zwischen 80°C und 250°C, besonders bevorzugt zwischen 120°C und 200°C erwärmt wird.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnungen, wobei gleiche oder gleich wirkende Elemente zumeist mit denselben Bezugszeichen versehen sind.

Es zeigen schematisch:
- Fig. 1: eine perspektivische Ansicht der Vorrichtung gemäß der Erfindung;
- Fig. 2: eine Seitenansicht der Vorrichtung aus Figur 1;
- Fig. 3: eine perspektivische Ansicht einer weiteren Ausführungsform der Vorrichtung aus Figur 1;
- Fig. 4: eine Vorderansicht der Vorrichtung aus Figur 2,
- Fig. 5: eine perspektivische Ansicht einer weiteren Ausführungsform der erfindungsgemäßen Vorrichtung;
- Figur 6: eine perspektivische Ansicht einer weiteren Ausführungsform der Vorrichtung aus Figur 1 und
- Figur 7: eine Seitenansicht der Vorrichtung, wobei in vergrößerten Teilausschnitten unterschiedliche Ausgestaltungen des Formteils gezeigt sind.

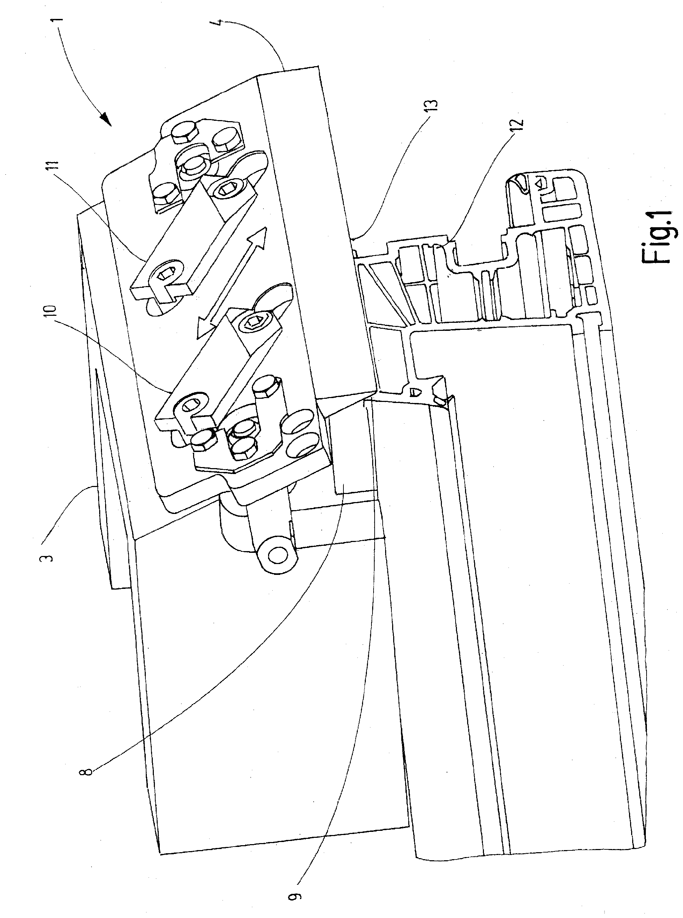

Fig. 1 zeigt eine perspektivische Ansicht einer Vorrichtung 1 zum Verbinden von zwei Kunststoffprofilteilen, wobei in Figur 1 nur das erste Profilteil 12 gezeigt ist.

Die Vorrichtung 1 weist einen in Figur 1 nicht gezeigten ersten Profilträger und einen in Figur 1 nicht gezeigten zweiten Profilträger auf. Die Profilträger sind im rechten Winkel zueinander angeordnet. Der erste Profilträger kann in eine erste Fügerichtung bewegt werden. Der zweite Profilträger kann in eine zweite Fügerichtung bewegt werden, wobei die erste Fügerichtung und die zweite Fügerichtung senkrecht zueinander stehen.

Der in Figur 1 nicht gezeigte erste Profilträger weist eine in Figur 1 nicht gezeigte Profilträgeraufnahme für die Aufnahme und zum Einspannen des Profilteils 12 auf, wobei das Profilteil 12, das foliert sein kann, und eine Heizfläche eines Heizelementes der Vorrichtung 1 miteinander in Kontakt gebracht werden, um das Profilteil 12 in seinem Schweißbereich vor einem Zusammenfügen mit dem anderen in Figur 1 nicht gezeigten Profilteil anzuschmelzen.

Wie Figur 1 weiter verdeutlicht, weist die Vorrichtung 1 ein Bearbeitungswerkzeug 3 auf, das in der in Figur 1 gezeigten Ausführungsform der Vorrichtung 1 oberhalb des Profilteils 12, der Profilträger und der Profilträgeraufnahme angeordnet ist.

Das Bearbeitungswerkzeug 3 kann generell oberhalb und/oder unterhalb des Profilteils 12, der Profilträger und der Profilträgeraufnahme angeordnet sein.

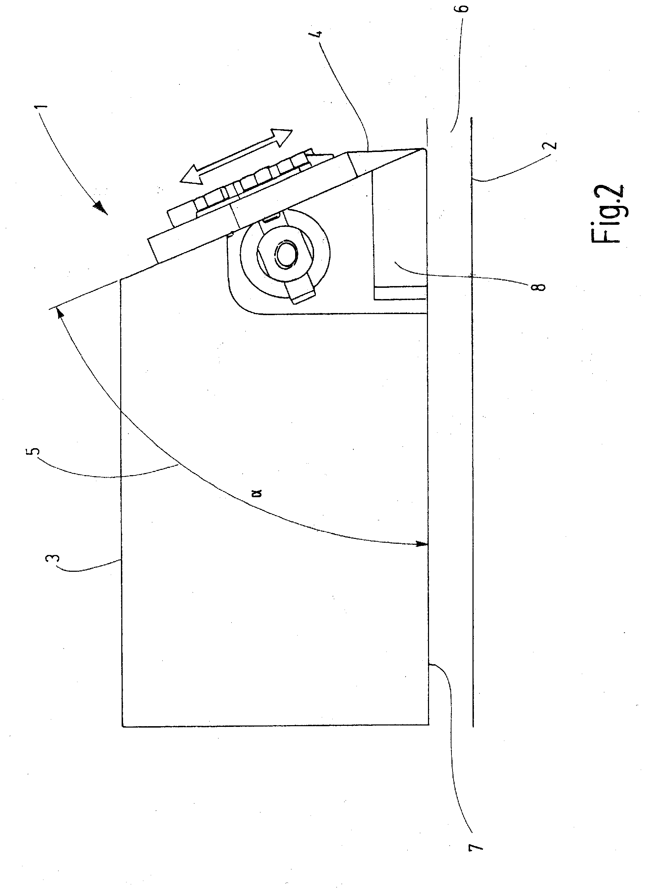

In dem unteren Bereich der Vorderseite des Bearbeitungswerkzeugs 3 befindet sich das Formteil 4 mit der Unterkante 13, mit dem ein Fließen und Verformen eines Schmelzgutes auf einer Sichtfläche einer Profilteils kontrollierbar ist und das aus einer Ruheposition in Richtung zu einer Arbeitsposition relativ zu der Profilträgeraufnahme 2 bewegbar ist, was durch den in Figur 2 gezeichneten Pfeil verdeutlicht ist. Das in Figur 2 nicht gezeigte Profilteil ist in dem Bereich 6 zwischen der Unterseite 7 des Bearbeitungswerkzeugs 3 und der in Figur 2 gezeigten Profilträgeraufnahme 2 einspannbar. Figur 2 zeigt eine Seitenansicht der Vorrichtung 1.

Die Kraft zur Bewegung des Formteils 4 ist einstellbar. Zudem sind die Antriebe zur Bewegung des Formteils 4 elektrisch oder pneumatisch angetrieben. Das vordere, den Profilträgeraufnahmen 2 zugewandte Ende des Formteils 4 ist spitz oder abgerundet..

Das Formteil 4 kann eine Auf- und Abwärtsbewegung vollziehen, d.h. das Formteil 4 ist aus einer Ruheposition in Richtung zu einer Arbeitsposition relativ zu der Profilträgeraufnahme 2 bewegbar. In erfindungswesentlicher Weise bilden das Formteil 4 und die Profilträgeraufnahme 2 einen Winkel α, der zwischen 15° und 45° beträgt und in Figur 2 mit dem Bezugszeichen 5 versehen ist, miteinander.

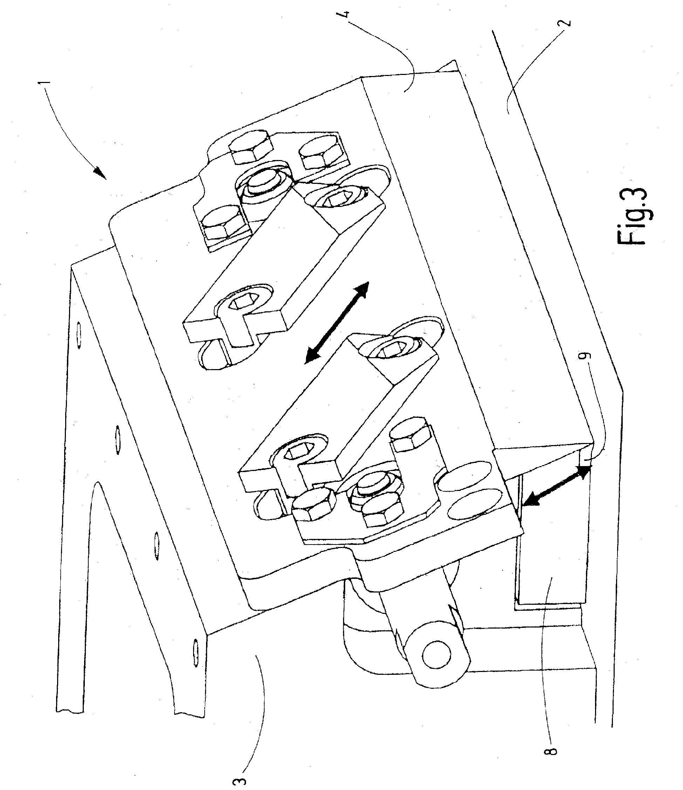

Das Bearbeitungswerkzeug 3 weist weiterhin, wie aus Figur 1 weiter hervorgeht, ein Begrenzungsmesser 8 auf, das oberhalb des Profilteils 12 und parallel zu diesem angeordnet ist, wobei das Begrenzungsmesser 8 oder ein Teil des Begrenzungsmessers 8 in Längsrichtung der in Figur 2 gezeigten Profilträgeraufnahme 2 ca. 1° von der Längsrichtung der Profilträgeraufnahme 2 abweicht. Der Winkel dieser Abweichung ist in Figur 3, die die Vorrichtung 1 zeigt, mit dem Bezugszeichen 9 versehen.

In der Regel weisen Profilträgeraufnahmen Gehrungskanten auf, die aneinander anstoßen, d.h. die entsprechenden Profilteile sind an ihren Stirnseitenschnittkanten auf Gehrung geschnitten. Auf Gehrung geschnittene Profilteile offenbart beispielsweise die DE 10 2014 118 368 B3. Das in Figur 3 gezeigte Formteil 4 des Bearbeitungswerkzeugs 3 vollzieht daher eine weitere Bewegung derart, dass das Formteil 4 in Richtung der Profilträgeraufnahme 2 bewegbar ist. Bewegungszustände dieser Bewegung sind in den Figuren 1, 3, 4 und 5 verdeutlicht. Das Formteil 4 wird während des Anschmelzens der Profilteile 12 und/oder des Fügens und/oder des kompletten Schweißprozesses der Profilteile 12 zwischen 0 mm und 2 mm seitlich zur Gehrung der Profilteile verschoben. Wie aus den Figuren 1, 3, 4 und 5 und der darin eingezeichneten Doppelpfeile entnehmbar ist, bewegt sich das Formteil 4 in Richtung der Gehrung der Profilteile 12 beziehungsweise entlang der und/oder bis vor die Stirnseitenschnittkante des Profilteils 12. Die Bewegung, die das Formteil 4 somit ausführt, weist folglich eine Komponente auf die Stirnseitenschnittkante des Profilteils 12 zu sowie eine Komponente entlang der Stirnseitenschnittkante auf, also in Richtung der Gehrung.

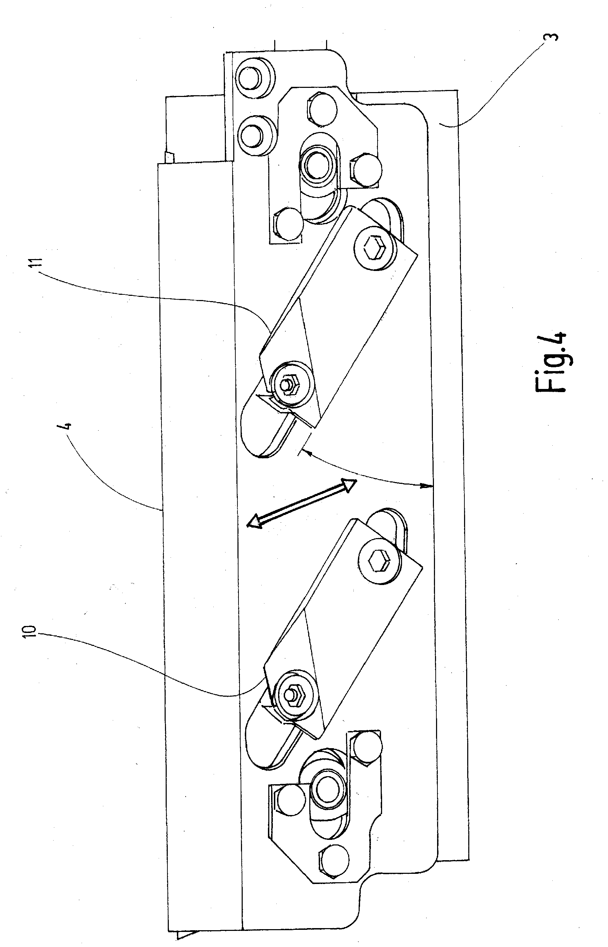

In Figur 4 hat das Formteil eine Abwärtsbewegung vollzogen, sodass sich die Unterkante des Formteils 4 ein Stück vor der Stirnseitenschnittkante des Profilteils befindet. Diesen Bewegungszustand verdeutlicht Figur 1 genauer. Figur 1 zeigt, dass das Formteil 4 in Richtung der Profilträgeraufnahme 2 verfahren wurde, sodass sich die Unterkante 13 des Formteils 4 ein Stück vor der Stirnseitenschnittkante des Profilteils 12 befindet. Die Führungselemente 10, 11 führen diese Bewegung, wie der in Figur 1 gezeigte Pfeil verdeutlicht

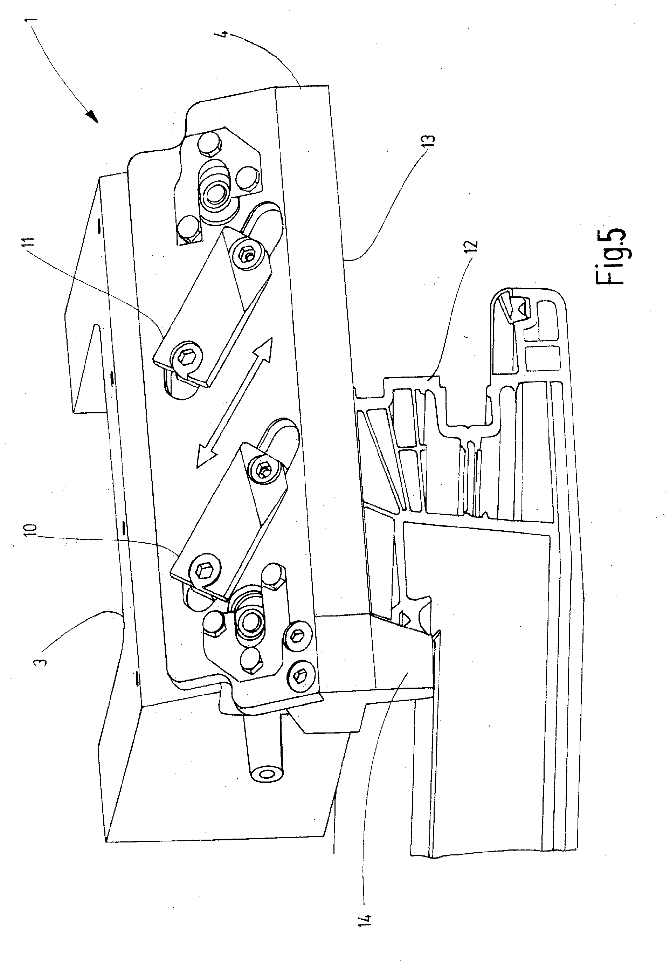

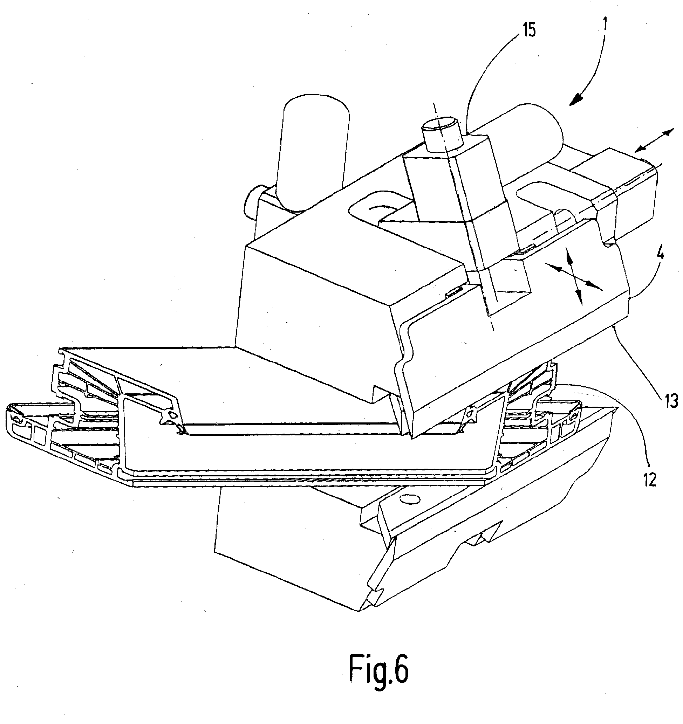

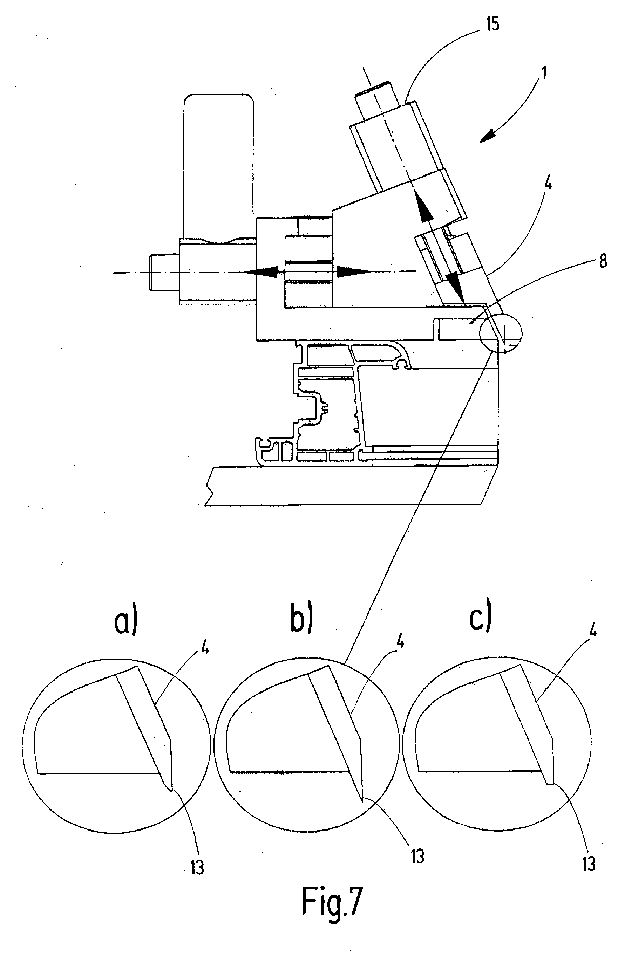

Eine weitere Ausführungsform der Erfindung zeigt Figur 5. Das Bearbeitungswerkzeug 3 weist ein Konturteil 14 für die Bearbeitung von Innenecken von in den Profilträgeraufnahmen rechtwinklig angeordneten Profilträgern auf. Das Konturteil 14 ist seitlich des Formteils 4 angeordnet und einteilig mit dem Formteil 4 ausgebildet. Es dient dazu, auch eine Inneneckverarbeitung bei zwei zueinander rechtwinklig angeordneten Profilteilen vorzunehmen. Die oberhalb des Formteils 4 angeordneten Führungselemente 10, 11 des Bearbeitungswerkzeugs 3 und somit auch das Formteil 4, das mit seiner Unterkante 13 ein Formmesser bildet, vollziehen dabei eine Drehung zwischen 0° und 85°, wobei die Bewegungsabläufe des Formteils 4 teilweise oder vollständig wiederholt werden. Figur 6 zeigt eine weitere Ausführungsform der Vorrichtung 1. In der in Figur 6 gezeigten Ausführungsform sind die in Figur 5 gezeigten Führungselemente 10, 11 durch das Führungselement 15 ersetzt. Das Führungselement 15 kann sowohl eine translatorische Bewegung als auch eine Schwenkbewegung ausführen. In Figur 7 hat das Formteil 4 eine Abwärtsbewegung vollzogen, sodass sich die Unterkante 13 des Formteils 4 ein Stück vor der Stirnseitenschnittkante des Profilteils befindet. Das Formteil 4 bildet zusammen mit der Unterkante 13 ein Formmesser. Das Formteil 4 kann mehrere Bewegungsrichtungen einnehmen. Es ist vertikal und / oder horizontal frei verfahrbar, wobei diese Bewegungen zeitversetzt erfolgen. Durch diese konstruktive Ausgestaltung und diesen Bewegungsablauf bewegen sich das Formteil während des Schweißprozesses auf der Sichtfläche bzw. der Sichtflächenkante des Profilteils 12 zu unterschiedlichen Zeiten, d.h. während des Schmelzvorgangs und des Vorgangs des Stauchens. Hierdurch gelingt ein kontrolliertes Unterdrücken bzw. Umlegen einer Schweißraube während des Schmelzvorgangs und Stauchenprozesses. Die vertikale Bewegung des Formteils 4, die über die Profiloberfläche des in Figur 4 gezeigten Profilteils 2 hinausgeht, wird hierzu zwischen 0 mm und 4 mm eingestellt. Die Unterkante 13 bzw. der untere Bereich des Formelements 4 können, wie die Teilausschnitte a) bis c) in Figur 7 verdeutlichen, verschiedene Formen haben bzw. annehmen. Die Unterkante 13 des Formteils 4 hat in Teilausschnitt a) eine schrägen und in Teilausschnitt b) einen spitzen Verlauf, wohingegen die Unterkante 13 des Formteils 4 auch einen stumpfen Verlauf haben kann (Teilausschnitt c).

Die vorliegende Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei anders gearteten Ausführungen Gebrauch machen. Beispielsweise können zwei Bearbeitungswerkzeuge 3 Verwendung finden, wobei die Bearbeitungswerkzeuge 3 oberhalb und unterhalb der Profilträgeraufnahmen 2 angeordnet sind. Auch kann das Formteil 4 während des Fügens der Profilteile12 als keilförmiger Stempel fungieren.

### Bezugszeichenliste

- 1: Vorrichtung
- 2: Profilträgeraufnahme
- 3: Bearbeitungswerkzeug
- 4: Formteil
- 5: Winkel
- 6: Bereich
- 7: Unterseite
- 8: Begrenzungsmesser
- 9: Abweichung
- 10: Führungselement
- 11: Führungselement
- 12: Profilteil
- 13: Unterkante
- 14: Konturteil
- 15: Führungselement

## Patentansprüche

1. Vorrichtung (1) zum Verbinden von Kunststoffprofilteilen, insbesondere zum Verschweißen von PVC-Profilstäben zu Fensterrahmen und Türrahmen, mit rechtwinklig zueinander angeordneten Profilträgern, die Profilträgeraufnahmen (2) für die Aufnahme und das Einspannen von Profilteilen (12) aufweisen, wobei wenigstens ein Profilteil (12) und eine Heizfläche eines Heizelementes der Vorrichtung (1) miteinander in Kontakt bringbar sind, um das wenigstens eine Profilteil (12) in seinem Schweißbereich vor einem Zusammenfügen mit dem anderen Profilteil anzuschmelzen, wobei ein Bearbeitungswerkzeug (3) vorgesehen ist, das zumindest ein Formteil aufweist (4), mit dem ein Fließen und Verformen eines Schmelzgutes auf einer Sichtfläche des Profilteils (12) kontrollierbar ist, wobei das Formteil (4) und die Profilträgeraufnahmen (2) einen Winkel α zwischen 10° und 50° miteinander bilden und das Formteil (4) aus einer Ruheposition in Richtung zu einer Arbeitsposition relativ zu der Profilträgeraufnahme (2) bewegbar ist, **dadurch gekennzeichnet, dass** das Bearbeitungswerkzeug (3) ein Begrenzungsmesser (8) aufweist, das oberhalb und / oder unterhalb der Profilträgeraufnahmen (2) und parallel zu den Profilträgeraufnahmen (2) angeordnet ist, wobei das Begrenzungsmesser (8) oder ein Teil des Begrenzungsmessers (8) in Längsrichtung der Profilträgeraufnahmen (2) zwischen 0° und 2° von der Längsrichtung der Profilträgeraufnahmen (2) abweicht.

2. Vorrichtung nach Anspruch 1, **dadurch gekennzeichnet, dass** das Formteil (4) und die Profilträgeraufnahmen (2) einen Winkel α zwischen 15° und 45° miteinander bilden.

3. Vorrichtung nach Anspruch 1 oder 2, **dadurch gekennzeichnet, dass** das Formteil (4) in Richtung der Gehrung der Profilteile (12) beziehungsweise entlang der und/oder bis vor die Stirnseitenschnittkante des Profilteils (12) bewegbar ist.

4. Vorrichtung nach Anspruch 1 bis 3, **dadurch gekennzeichnet, dass** das Begrenzungsmesser (8) oder ein Teil des Begrenzungsmessers (8) in Längsrichtung der Profilträgeraufnahmen (2) zwischen 0,5° und 1,5°, bevorzugt 1°, von der Längsrichtung der Profilträgeraufnahmen (2) abweicht.

5. Vorrichtung nach einem der vorangegangenen Ansprüche, **dadurch gekennzeichnet, dass** das Bearbeitungswerkzeug (3)
a. oberhalb und/oder unterhalb der Profilträgeraufnahmen (2) angeordnet ist und/oder
b. ein Konturteil (14) für die Bearbeitung von Innenecken von in den Profilträgeraufnahmen (2) rechtwinklig angeordneten Profilträgern aufweist, wobei das Konturteil (14) seitlich des Formteils (4) an der einer Innenecke des Profilteils zugewandten Seite angeordnet und ausgebildet ist.

6. Vorrichtung nach einem der vorhergehenden Ansprüche, **dadurch gekennzeichnet, dass** das vordere, den Profilträgeraufnahmen (2) zugewandte Ende des Formteils (4) spitz oder abgerundet ist.

7. Vorrichtung nach einem der vorhergehenden Ansprüche, **dadurch gekennzeichnet, dass** das Formteil (4)
a. vertikal und / oder horizontal frei verfahrbar ist oder
b. vertikal und / oder horizontal frei verfahrbar ist und zeitversetzt bewegbar ist und/oder
c. über 50°C, bevorzugt zwischen 80°C und 250°C, besonders bevorzugt zwischen 120°C und 200°C erwärmbar ist oder
d. vertikal und / oder horizontal frei verfahrbar ist und das Formteil (4) über 50°C, bevorzugt zwischen 80°C und 250°C, besonders bevorzugt zwischen 120°C und 200°C erwärmbar ist.

8. Verfahren zum Verbinden von Kunststoffprofilteilen, insbesondere zum Verschweißen von PVC-Profilstäben zu Fensterrahmen und Türrahmen, bei dem die Profilteile (12) in Profilträgeraufnahmen (2) aufgenommen und eingespannt werden, wobei wenigstens ein Profilteil (12) und eine Heizfläche eines Heizelementes miteinander in Kontakt gebracht werden, um das wenigstens eine Profilteil( 12) in seinem Schweißbereich vor einem Zusammenfügen mit dem anderen Profilteil anzuschmelzen, wobei ein Bearbeitungswerkzeug (3) vorgesehen ist, das zumindest ein Formteil (4) aufweist, mit dem ein Fließen und Verformen eines Schmelzgutes auf einer Sichtfläche einer Profilteils (12) kontrolliert wird, wobei das Formteil (4) in Richtung der Profilträgeraufnahmen (2) bewegt wird und dabei das Formteil (4) und die Profilträgeraufnahmen (2) einen Winkel (5) zwischen 10° und 50° miteinander bilden, **dadurch gekennzeichnet, dass** das Formteil (4) über 50°C erwärmt wird und ein oberhalb und parallel zu den Profilträgeraufnahmen (2) bewegbares Begrenzungsmesser (8) des Bearbeitungswerkzeugs (3) oder ein Teil eines oberhalb der Profilträgeraufnahmen (2) bewegbaren und parallel zu den Profilträgeraufnahmen (2) bewegbaren Begrenzungsmessers (8) des Bearbeitungswerkzeugs (3) bei seiner Bewegung in Längsrichtung der Profilträgeraufnahmen (2) zwischen 0° und 2° von der Längsrichtung der Profilträgeraufnahmen (2) abweicht.

9. Verfahren nach Anspruch 8, **dadurch gekennzeichnet, dass** das Formteil (4) in Richtung der Profilträgeraufnahmen (2) bewegt wird und dabei das Formteil (4) und die Profilträgeraufnahmen (2) einen Winkel zwischen 15° und 45° miteinander bilden.

10. Verfahren nach Anspruch 8 oder 9, **dadurch gekennzeichnet, dass** das Begrenzungsmesser (8) oder ein Teil des Begrenzungsmessers (8) bei seiner Bewegung in Längsrichtung der Profilträgeraufnahmen (2) um 1° von der Längsrichtung der Profilträgeraufnahmen (2) abweicht.

11. Verfahren nach einem der Ansprüche 8 bis 10, **dadurch gekennzeichnet,**
a. **dass** das Formteil (4) vertikal und / oder horizontal und / oder frei verfahrbar ist oder
b. **dass** das Formteil (4) vertikal und / oder horizontal und / oder frei verfahrbar ist und dass das Formteil (4) zeitversetzt bewegt wird oder
c. **dass** das Formteil (4) vertikal und / oder horizontal und / oder frei verfahrbar ist und dass das Formteil (4) zeitversetzt bewegt wird und dass die vertikale Bewegung des Formteils (4), die über die Profiloberfläche des Profilteils (2) hinausgeht, zwischen 0 mm und 4 mm eingestellt wird, wobei das Formteil (4) oberhalb und/oder unterhalb der Profiloberfläche angeordnet ist und die vertikale Bewegung aus der unteren und/oder oberen Position in Richtung der Profiloberfläche erfolgt.

12. Verfahren nach einem der Ansprüche 8 bis 11, **dadurch gekennzeichnet, dass** das Formteil (4) zusammen mit seiner Unterkante (13) eine Bewegung zwischen 0° und 85° vollzieht.

13. Verfahren nach einem der Ansprüche 8 bis 12, **dadurch gekennzeichnet, dass** das Formteil (4) während des kompletten Schweißprozesses der Profilteile (12) zwischen 0 mm und 2 mm seitlich zur Gehrung der Profilteile (12) verschoben wird.

14. Verfahren nach einem der Ansprüche 8 bis 13, **dadurch gekennzeichnet, dass** das Formteil (4) während des Fügens der Profilteile (12) als keilförmiger Stempel fungiert.

15. Verfahren nach einem der Ansprüche 8 bis 14, **dadurch gekennzeichnet, dass** das Formteil (4) in Richtung der Gehrung der Profilteile (12) beziehungsweise entlang der und/oder bis vor die Stirnseitenschnittkante des Profilteils (12) bewegt wird.

## Claims

1. Apparatus (1) for connecting plastic profiled parts, in particular for welding PVC profiled bars to form window frames and door frames, having profile supports which are disposed orthogonally to one another and have profile-support mounts (2) in which profiled parts (12) are accommodated and clamped, wherein at least one profiled part (12) and a heating surface of a heating element of the apparatus (1) can be brought into contact with one another in order to start melting of the at least one profiled part (12) in its welding region prior to being joined together with the other profiled part, wherein a processing tool (3) is provided, said tool having at least one forming part (4) by means of which it is possible to control flow and deformation of a melt (24) on a visible surface of the profiled part (12), wherein the forming part (4) and the profile-support mounts (2) form an angle α between 10° and 50° with one another, and the forming part (4) can be moved from a rest position in the direction of an operating position relative to the profile-support mount (2), **characterized in that** the processing tool (3) has a delimiting blade (8), which is disposed above and/or beneath the profile-support mounts (2) and parallel to the profile-support mounts (2), wherein the delimiting blade (8), or part of the delimiting blade (8), in the longitudinal direction of the profile-support mounts (2) deviates by between 0° and 2° from the longitudinal direction of the profile-support mounts (2).

2. Apparatus according to Claim 1, **characterized in that** the forming part (4) and the profile-support mounts (2) form an angle α between 15° and 45° with one another.

3. Apparatus according to Claim 1 or 2, **characterized in that** the forming part (4) is movable in the direction of the mitre of the profiled parts (12), or along the and/or up to in front of the end-side cutting edge of the profiled part (12).

4. Apparatus according to Claims 1 to 3, **characterized in that** the delimiting blade (8), or part of the delimiting blade (8), in the longitudinal direction of the profile-support mounts (2) deviates by between 0.5° and 1.5°, preferably 1°, from the longitudinal direction of the profile-support mounts (2).

5. Apparatus according to one of the preceding claims, **characterized in that** the processing tool (3)
is disposed above and/or below the profile-support mounts (2), and/or has a contoured part (14) for the processing of internal corners of profile supports disposed orthogonally in the profile-support mounts (2), wherein the contoured part (14) is disposed and configured laterally of the forming part (4), on that side that faces an internal corner of the profiled part.

6. Apparatus according to one of the preceding claims, **characterized in that** the front end of the forming part (4) that faces the profile-support mounts (2) is pointed or radiused.

7. Apparatus according to one of the preceding claims, **characterized in that** the forming part (4)
is freely displaceable vertically and/or horizontally, or
is freely displaceable vertically and/or horizontally and is movable in a temporally offset manner, and/or
is able to be heated beyond 50°C, preferably between 80°C and 250°C, particularly preferably between 120°C and 200°C, or
is freely displaceable vertically and/or horizontally, and the forming part (4) is able to be heated beyond 50°C, preferably between 80°C and 250°C, particularly preferably between 120°C and 200°C.

8. Method for connecting plastic profiled parts, in particular for welding PVC profiled bars to form window frames and door frames, in the case of which the profiled parts (12) are accommodated and clamped in profile-support mounts (2), wherein at least one profiled part (12) and a heating surface of a heating element are brought into contact with one another in order to start melting of the at least one profiled part (12) in its welding region prior to being jointed together with the other profiled part, wherein a processing tool (3) is provided, said processing tool having at least one forming part (4) by which to control flow and deformation of a melt on a visible surface of a profiled part (12), wherein the forming part (4) is moved in the direction of the profile-support mounts (2), and the forming part (4) and the profile-support mounts (2) herein form an angle (5) between 10° and 50° with one another, **characterized in that** the forming part (4) is heated beyond 50°C, and a delimiting blade (8) of the processing tool (3), which is movable above and parallel to the profile-support mounts (2), or part of a delimiting blade (8) of the processing tool (3), which is movable above the profile-support mounts (2) and parallel to the profile-support mounts (2), in its movement in the longitudinal direction of the profile-support mounts (2) deviates by between 0° and 2° from the longitudinal direction of the profile-support mounts (2).

9. Method according to Claim 8, **characterized in that** the forming part (4) is moved in the direction of the profile-support mounts (2), and the forming part (4) and the profile-support mounts (2) herein form an angle between 15° and 45° with one another.

10. Method according to Claim 8 or 9, **characterized in that** the delimiting blade (8) in its movement in the longitudinal direction of the profile-support mounts (2) deviates by 1° from the longitudinal direction of the profile-support mounts (2).

11. Method according to one of Claims 8 to 10, **characterized in that** the forming part (4) is displaceable vertically and/or horizontally and/or freely, or
the forming part (4) is displaceable vertically and/or horizontally and/or freely, and **in that** the forming part (4) is moved in a temporally offset manner, or
the forming part (4) is displaceable vertically and/or horizontally and/or freely, and **in that** the forming part (4) is moved in a temporally offset manner, and **in that** the vertical movement of the forming part (4), which goes beyond the profile surface of the profiled part (2), is set to between 0 mm and 4 mm, wherein the forming part (4) is disposed above and/or below the profile surface, and the vertical movement is performed from the lower and/or upper position in the direction of the profile surface.

12. Method according to one of Claims 8 to 11, **characterized in that** the forming part (4) conjointly with the lower edge (13) thereof executes a movement between 0° and 85°.

13. Method according to one of Claims 8 to 12, **characterized in that** the forming part (4) during the complete welding process of the profiled parts (12) is displaced laterally to the mitre of the profiled parts (12) by between 0 mm and 2 mm.

14. Method according to one of Claims 8 to 13, **characterized in that** the forming part (4) during joining of the profiled parts (12) functions as a wedge-shaped die.

15. Method according to one of Claims 8 to 14, **characterized in that** the forming part (4) is moved in the direction of the mitre of the profiled parts (12), or along the and/or up to in front of the end-side cutting edge of the profiled part (12).

## Revendications

1. Dispositif (1) destiné à relier des pièces profilées en plastique, en particulier à souder des barres profilées en PVC pour former des cadres de fenêtres et des cadres de porte, comprenant des supports profilés disposés perpendiculairement les uns par rapport aux autres, qui présentent des logements de supports profilés (2) pour recevoir et serrer des pièces profilées (12), au moins une pièce profilée (12) et une surface de chauffage d'un élément chauffant du dispositif (1) pouvant être amenées en contact l'une avec l'autre afin de faire fondre l'au moins une pièce profilée (12) dans sa zone de soudage avant un assemblage avec l'autre pièce profilée, un outil de traitement (3) étant prévu, lequel présente au moins une pièce de formage (4) avec laquelle un écoulement et une déformation d'une matière de fusion sur une surface visible de la pièce profilée (12) peuvent être contrôlés, la pièce de formage (4) et les logements de supports profilés (2) formant un angle α entre 10° et 50° l'un avec l'autre et la pièce de formage (4) pouvant être déplacée à partir d'une position de repos en direction d'une position de travail par rapport au logement de support profilé (2), **caractérisé en ce que** l'outil de traitement (3) présente un couteau de limitation (8) qui est disposé au-dessus et/ou en dessous des logements de supports profilés (2) et parallèlement aux logements de supports profilés (2), le couteau de limitation (8) ou une partie du couteau de limitation (8), dans la direction longitudinale des logements de supports profilés (2), s'écartant d'entre 0° et 2° de la direction longitudinale des logements de supports profilés (2).

2. Dispositif selon la revendication 1, **caractérisé en ce que** la pièce de formage (4) et les logements de supports profilés (2) forment ensemble un angle α compris entre 15° et 45°.

3. Dispositif selon la revendication 1 ou 2, **caractérisé en ce que** la pièce de formage (4) peut être déplacée en direction de l'onglet des pièces profilées (12) ou le long de et/ou jusqu'à devant l'arête de coupe côté frontal de la pièce profilée (12).

4. Dispositif selon les revendications 1 à 3, **caractérisé en ce que** le couteau de limitation (8) ou une partie du couteau de limitation (8), dans la direction longitudinale des logements de supports profilés (2), s'écarte d'entre 0,5° et 1,5°, de préférence de 1°, de la direction longitudinale des logements de supports profilés (2).

5. Dispositif selon l'une quelconque des revendications précédentes, **caractérisé en ce que** l'outil de traitement (3)
a. est disposé au-dessus et/ou en dessous des logements de supports profilés (2) et/ou
b. présente une pièce de contour (14) pour le traitement de coins intérieurs de supports profilés disposés perpendiculairement dans les logements de supports profilés (2), la pièce de contour (14) étant disposée et réalisée latéralement par rapport à la pièce de formage (4) sur le côté tourné vers un coin intérieur de la pièce profilée.

6. Dispositif selon l'une quelconque des revendications précédentes, **caractérisé en ce que** l'extrémité avant, tournée vers les logements de supports profilés (2), de la pièce de formage (4) est pointue ou arrondie.

7. Dispositif selon l'une quelconque des revendications précédentes, **caractérisé en ce que** la pièce de formage (4)
a. peut être déplacée librement verticalement et/ou horizontalement ou
b. peut être déplacée librement verticalement et/ou horizontalement et est mobile de façon décalée dans le temps et/ou
c. peut être chauffée au-delà de 50°C, de préférence entre 80°C et 250°C, de manière particulièrement préférée entre 120°C et 200°C ou
d. peut être déplacée librement verticalement et/ou horizontalement et la pièce de formage (4) peut être chauffée au-delà de 50°C, de préférence entre 80°C et 250°C, de manière particulièrement préférée entre 120°C et 200°C.

8. Procédé destiné à relier des pièces profilées en plastique, en particulier à souder des barres profilées en PVC pour former des cadres de fenêtres et des cadres de porte, dans lequel les pièces profilées (12) sont reçues et serrées dans des logements de supports profilés (2), au moins une pièce profilée (12) et une surface de chauffage d'un élément chauffant étant amenées en contact l'une avec l'autre afin de faire fondre l'au moins une pièce profilée (12) dans sa zone de soudage avant un assemblage avec l'autre pièce profilée, un outil de traitement (3) étant prévu, lequel présente au moins une pièce de formage (4) avec laquelle un écoulement et une déformation d'une matière de fusion sur une surface visible d'une pièce profilée (12) peuvent être contrôlés, la pièce profilée (4) étant déplacée en direction des logements de supports profilés (2), et en l'occurrence la pièce de formage (4) et les logements de supports profilés (2) formant ensemble un angle (5) entre 10° et 50°, **caractérisé en ce que** la pièce de formage (4) est chauffée au-delà de 50°C et un couteau de limitation (8) de l'outil de traitement (3), déplaçable au-dessus des, et parallèlement aux, logements de supports profilés (2), ou une partie d'un couteau de limitation (8) de l'outil de traitement (3), déplaçable au-dessus des logements de supports profilés (2) et parallèlement aux logements de supports profilés (2), lors de son déplacement dans la direction longitudinale des logements de supports profilés (2), s'écarte d'entre 0° et 2° de la direction longitudinale des logements de supports profilés (2).

9. Procédé selon la revendication 8, **caractérisé en ce que** la pièce de formage (4) est déplacée en direction des logements de supports profilés (2) et en l'occurrence la pièce de formage (4) et les logements de supports profilés (2) forment ensemble un angle compris entre 15° et 45°.

10. Procédé selon la revendication 8 ou 9, **caractérisé en ce que** le couteau de limitation (8) ou une partie du couteau de limitation (8), lors de son déplacement dans la direction longitudinale des logements de supports profilés (2), s'écarte de 1° de la direction longitudinale des logements de supports profilés (2).

11. Procédé selon l'une quelconque des revendications 8 à 10, **caractérisé**
a. **en ce que** la pièce de formage (4) peut être déplacée verticalement et/ou horizontalement et/ou librement ou
b. **en ce que** la pièce de formage (4) peut être déplacée verticalement et/ou horizontalement et/ou librement et en ce que la pièce de formage (4) est déplacée de façon décalée dans le temps ou
c. **en ce que** la pièce de formage (4) peut être déplacée verticalement et/ou horizontalement et/ou librement et en ce que la pièce de formage (4) est déplacée de façon décalée dans le temps et en ce que le déplacement vertical de la pièce de formage (4), qui va au-delà de la surface profilée de la pièce profilée (2), est réglé entre 0 mm et 4 mm, la pièce de formage (4) étant disposée au-dessus et/ou en dessous de la surface profilée et le déplacement vertical s'effectuant à partir de la position inférieure et/ou supérieure en direction de la surface profilée.

12. Procédé selon l'une quelconque des revendications 8 à 11, **caractérisé en ce que** la pièce de formage (4) effectue conjointement avec son arête inférieure (13) un déplacement d'entre 0° et 85°.

13. Procédé selon l'une quelconque des revendications 8 à 12, **caractérisé en ce que** la pièce de formage (4), pendant le processus de soudage complet des pièces profilées (12), est décalée d'entre 0 mm et 2 mm latéralement par rapport à l'onglet des pièces profilées (12).

14. Procédé selon l'une quelconque des revendications 8 à 13, **caractérisé en ce que** la pièce de formage (4) fonctionne comme un poinçon cunéiforme pendant l'assemblage des pièces profilées (12).

15. Procédé selon l'une quelconque des revendications 8 à 14, **caractérisé en ce que** la pièce de formage (4) est déplacée en direction de l'onglet des pièces profilées (12) ou le long de et/ou jusqu'à devant l'arête de coupe côté frontal de la pièce profilée (12).
